# EUROPEAN PATENT SPECIFICATION

(11) **EP 2 637 164 B1**
(45) Date of publication and mention of the grant of the patent: **11.10.2017**
(21) Application number: 11837767.0
(22) Date of filing: 27.01.2011
(51) Int. Cl.: G09G 5/39, G09G 3/20, G09G 5/00, G09G 5/393

(54) **DRAWING DEVICE AND DRAWING METHOD**
ZEICHNUNGSVORRICHTUNG UND ZEICHNUNGSVERFAHREN
DISPOSITIF DE DESSIN ET PROCÉDÉ DE DESSIN

(30) Priority: 01.11.2010 JP 2010245707
(43) Date of publication of application: 11.09.2013
(73) Proprietor: Mitsubishi Electric Corporation, Tokyo 100-8310 (JP)
(72) Inventor: NAKATA, Masanori, Tokyo 100-8310 (JP); KUSHIRO, Noriyuki, Tokyo 100-8310 (JP); KATSUKURA, Makoto, Tokyo 100-8310 (JP); KOIZUMI, Yoshiaki, Tokyo 100-8310 (JP)
(74) Representative: Pfenning, Meinig & Partner mbB
(86) International application number: PCT/JP2011/051660
(87) International publication number: WO 2012/060113

(56) References cited:
- GB-A- 2 223 918
- JP-A- 10 187 133
- JP-A- 59 052 291
- JP-A- 62 072 077
- US-A- 4 779 223
- US-A- 4 845 656
- US-A- 5 353 403
- US-A- 6 111 592

## Description

### [Technical Field]

The present invention relates to a rendering device and rendering method for rendering an image on a full-dot liquid crystal screen of a remote controller and/or the like used in remote operation of an air conditioning device, a lighting device and/or the like.

### [Background Art]

Conventionally, a seven-segment type of simple display has been used for the display screens of remote controllers used in remote operation of an air conditioning device, a lighting device and/or the like. However, recently a growing number are equipped with a full-dot liquid crystal display screen (for example, see Patent Literature 1).

### [Citation List]

### [Patent Literature]

[PTL 1] Unexamined Japanese Patent Application Kokai Publication No. 2010-175786.

US 4779223 A describes a display apparatus having an image memory controller utilizing a barrel shifter and a mask controller preparing data to be written into an image memory.

GB 2223918 describes a method and apparatus for optimizing selected raster operations. Circuitry for performing high speed operations on certain boolian raster operations in a work station whose functions include the display of graphics images using multiple planes and having foreground and background colours is described.

US 4,845,656 describes a data-processing apparatus provided with a bit boundary block transfer unit. A CPU forms a list of parameters required for transferring characters forming one block of text, and stores the list in a memory. A parameter control section of the boundary block transfer unit sequentially reads the parameters and writes them in a parameter file. When the block of text has been transferred, an interrupt is supplied to a CPU processing the data.

### [Summary of Invention]

### [Technical Problem]

When displaying two-dimensional images such as a character on a full-dot liquid crystal display screen, a bit map image such as a character and/or the like is transferred from a ROM (Read Only Memory) to a VRAM (Video Random Access Memory). This transfer is accomplished by address unit (for example, 8-bit unit).

Consequently, there was an inconvenience in that the image such as a character could only be arranged in an 8-bit space on the VRAM, and through this the freedom of display was limited. In addition, when the attempt was made to display an image such as a character at a central position in the 8-bit space, the inconvenience arose that a portion of a different image already displayed was erased.

In consideration of the foregoing, it is an objective of the present invention to provide a rendering device and rendering method that can improve the freedom of display in a full-dot liquid crystal display screen.

### [Solution to Problem]

The rendering device according to the present invention is described in claim 1.

### [Advantageous Effects of Invention]

With the present invention, it is possible to shift each row of image data read from a memory medium by a designated number of bits and to integrate such with surrounding images already displayed, so it is possible to cause a character to be displayed at an arbitrary position and it is also possible to prevent erasure of surrounding images that are already displayed. As a result, it is possible to improve freedom of display on a full-dot liquid crystal display screen.

### [Brief Description of Drawings]

[FIG. 1] is a block diagram showing the composition of a rendering device according to a preferred embodiment of the present invention;
[FIG. 2A] is a rendering showing one example of a bit map image for a character;
[FIG. 2B] is a rendering schematically showing the state in which data of a bit-map image of the character of FIG. 2A is stored in a ROM;
[FIG. 3] is a block diagram showing the composition of the DMA controller of FIG. 1;
[FIG. 4A] is a rendering for explaining a first transfer mode in the DMA controller of FIG. 3;
[FIG. 4B] is a rendering for explaining a second transfer mode in the DMA controller of FIG. 3;
[FIG. 4C] is a rendering for explaining a third transfer mode in the DMA controller of FIG. 3;
[FIG. 5] is a rendering for explaining a memory map of the VRAM of FIG. 1;
[FIG. 6] is a rendering showing one example of a whole image displayed on the display screen of the display device of FIG. 1;
[FIG. 7] is a block diagram for explaining the composition of the companion chip of FIG. 1, and the flow of signals;
[FIG. 8A] is a rendering showing one example (number one) of a process of the controller;
[FIG. 8B] is a rendering showing one example (number one) of an image displayed on the display device;
[FIG. 9] is a rendering showing the process sequence of the rendering device of FIG. 1;
[FIG. 10A] is a rendering showing one example (number two) of a process of the controller;
[FIG. 10B] is a rendering showing one example (number two) of an image displayed on the display device;
[FIG. 11A] is a rendering showing one example (number three) of a process of the controller; and
[FIG. 11B] is a rendering showing one example (number three) of an image displayed on the display device.

### [Description of Embodiments]

The preferred embodiment of the present invention is described in detail below with reference to the renderings;

The rendering device according to the preferred embodiment of the present invention is described below.

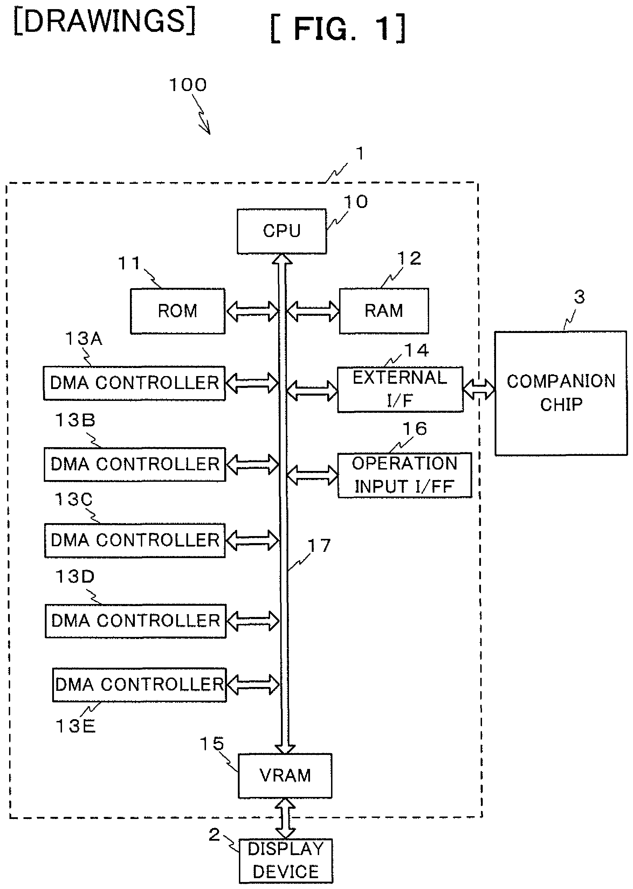

First, the composition of a rendering device 100 according to this preferred embodiment will be explained with reference to FIG. 1. This rendering device 100 is, for example, a remote controller for an unrepresented air conditioning device. As shown in FIG. 1, the rendering device 100 is provided with a microcomputer 1, a display device 2 and a companion chip 3.

The microcomputer 1 comprises a CPU 10; a ROM 11; a RAM (Random Access Memory) 12; DMA controllers 13A, 13B, 13C, 13D and 13E; an external interface (I/F) 14; a VRAM 15; and an operation input interface (I/F) 16. These are mutually connected via a bus 17 to enable receiving and transmitting of data.

As a processor, the CPU 10 controls the rendering device 100 as a whole. In addition, it would be fine for the CPU 10 to control not just the rendering device (remote controller) 100 but also the air conditioning device as a whole. In addition, it would be fine for the CPU 10 to accomplish cooperative control extending over multiple air conditioning devices.

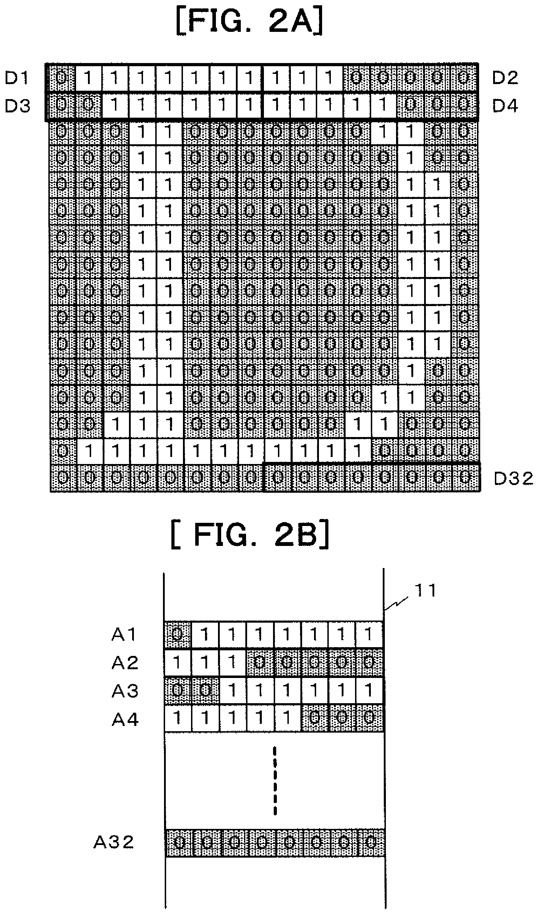

As a memory medium, the ROM 11 stores multiple items of displayed image data. Included in this kind of image data is image data such as characters and figures. In FIG. 2A, a bitmap image of the character "D" is displayed as one example of this kind of image. This bitmap image is a 16 bits x 16 bits image. Supposing 1 byte to be 8 bits, the bitmap image contains a total of 32 bytes of data.

Here, suppose the 8 bits on the left side of the top row of the bitmap image is data D1, and the 8 bits on the right side of the top row is data D2. In addition, suppose the 8 bits on the left side of the next row is data D3 and the 8 bits on the right side of that row is data D4. Similarly, when the 8 bits on the left side and the 8 bits on the right side of each row are compiled, the 8 bits on the right side of the bottom row of the bitmap image becomes data D32.

The data of this bitmap image is stored in the ROM 11, as shown in FIG. 2B. As shown in FIG. 2B, the data D1 that is the 8 bits on the left side of the top row of the bitmap image is stored at an address A 1. The data D2 is stored at the next address A2. Similarly, the data D3 that is the 8 bits on the left side of the next row is stored at an address A3, and the data D4 of the 8 bits on the right side is stored at an address A4. Furthermore, the data D32 that is the 8 bits on the right side of the bottom row is stored at a final address A32.

In this manner, the data sequence of each row of an image such as a character that should be displayed is linked in order in the ROM 11 and is stored in address order.

Data used by the CPU 10 is written as necessary in the RAM 12.

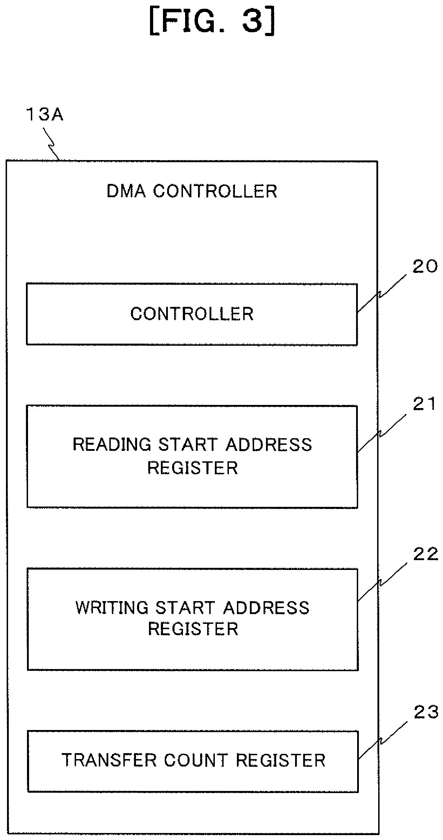

The DMA controllers 13A, 13B, 13C, 13D and 13E accomplish data transfer independent of the CPU 10. FIG. 3 shows the composition of the DMA controller 13A. As shown in FIG. 3, the DMA controller 13A comprises a controller 20, a reading start address register 21, a writing start address register 22 and a transfer count register 23.

The controller 20 transfers data to a transfer destination from a transfer source via the bus 17. The reading start address at the transfer source is set in the reading start address register 21. The writing start address at the transfer destination is set in the writing start address register 22. The number of times DMA transfer is accomplished is set in the transfer count register 23. Because the size of data transferred with one transfer is 1 byte, for example the transfer count when transferring 32 bytes of data is 32.

The controller 20 reads the data in address units (1 byte) from the reading start address set in the reading start address register 21. The controller 20 does a DMA transfer of the data from the transfer source to the transfer destination by successively writing the data starting at the writing start address stored in the writing start address register 22. DMA transfer ends with the transfer count stored in the transfer count register 23.

The compositions of the DMA controllers 13B, 13C, 13D and 13E are the same as the composition of the DMA controller 13A shown in FIG. 3. Below, the reading start address register 21, the writing start address register 22 and the transfer count register 23 are together called the register group.

It is possible for the DMA controllers 13A, 13B, 13C, 13D and 13E to accomplish data transfer in three transfer modes.

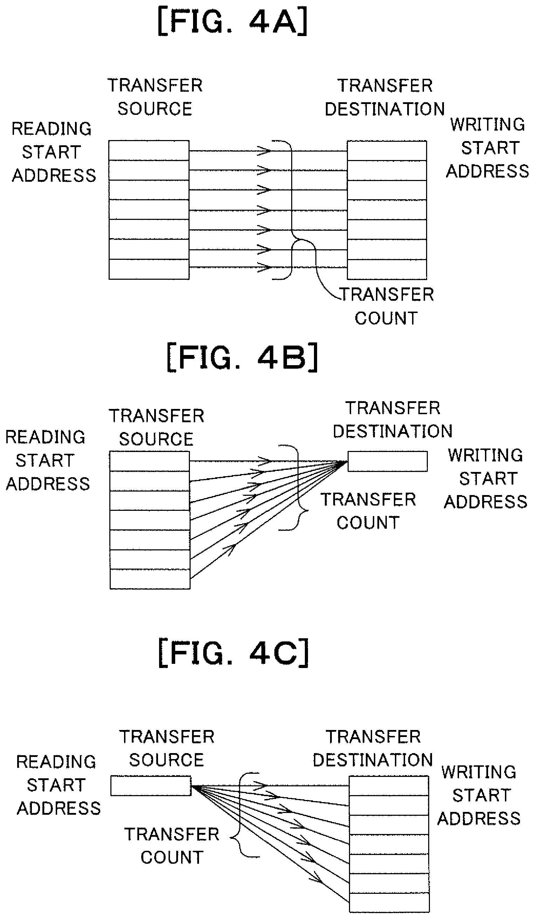

FIG. 4A schematically shows a first transfer mode. As shown in FIG. 4A, the first transfer mode is a transfer mode for shifting both the transfer source address and the transfer destination address each time 1 byte is written. With this first transfer mode, the data of the transfer source is copied without change to the transfer destination.

FIG. 4B schematically shows a second transfer mode. As shown in FIG. 4B, the second transfer mode is a transfer mode for fixing the transfer destination address. With this second transfer mode, the data of the transfer source is overwritten on the same address at the transfer destination (writing start address).

FIG. 4C schematically shows a third transfer mode. As shown in FIG. 4C, the third transfer mode is a transfer mode for fixing the address of the transfer source. With this third transfer mode, data from the transfer source written at the reading start address is written to multiple addresses at the transfer destination in a byte count corresponding to the transfer count, starting at the writing start address.

In this preferred embodiment, the DMA controller 13A acts under the second transfer mode. The DMA controller 13B acts under the third transfer mode. The DMA controllers 13C, 13D and 13E act under the first transfer mode.

The external I/F 14 is a communication interface for accomplishing data sending and receiving with external equipment. The companion chip 3 is connected to the external I/F 14. Through this, the companion chip 3 is able to send and receive data with the CPU 10; the ROM 11; the RAM 12; the DMA controllers 13A, 13B, 13C, 13D and 13E; the external I/F 14; and the VRAM 15.

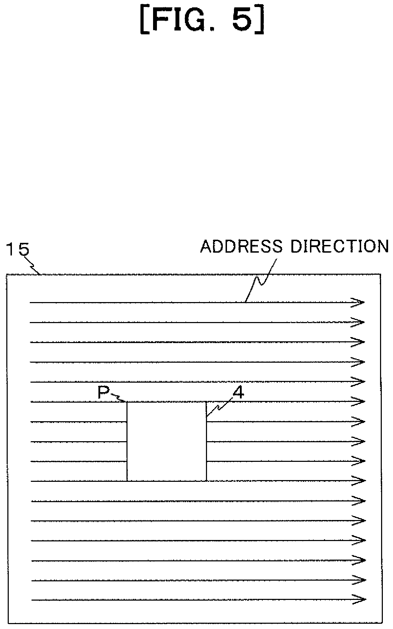

The VRAM 15 is memory for two-dimensional image displays. FIG. 5 schematically shows a memory map of the VRAM 15. As shown in FIG. 5, the direction of addresses in the VRAM 15 is a row direction (horizontal direction). The smallest address is at the top left edge of the VRAM 15, while the largest address is at the lower right edge.

When the attempt is made to write the image data 4 with a specific position P in the VRAM 15 as the standard, the image data 4 is written from the address corresponding to the specific position P. In this case, when the next row of the data sequence in the image data 4 is written, it is necessary to update the address at the transfer destination to an address in the same column as the writing start address of the next row, or to add an offset.

The operation input interface 16 is a man-machine interface having an operation input unit such as a button and/or the like that can be operated by a user.

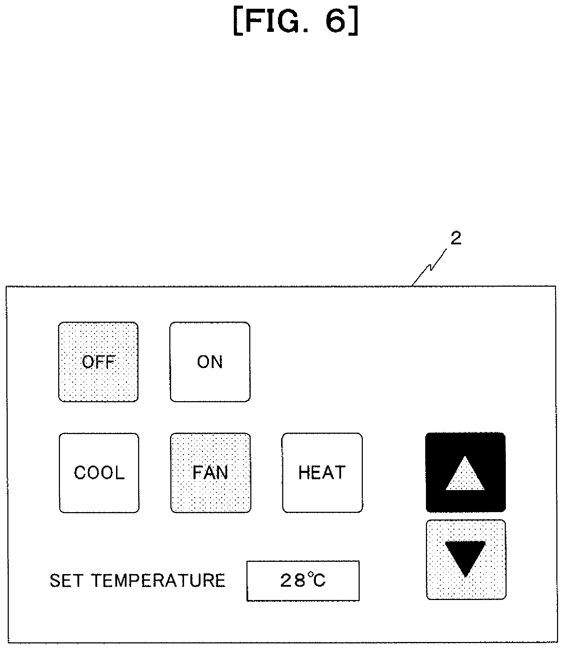

The display device 2 possesses a full-dot liquid crystal display screen. The size of this display screen is, for example, 120 through 240 dots vertically and 250 through 320 dots horizontally. When the image data is written on the VRAM 15, an image based on that image data is displayed on this display screen. FIG. 6 shows an example of a screen displayed on the display device 2. It would also be fine to provide a touch panel on the display screen.

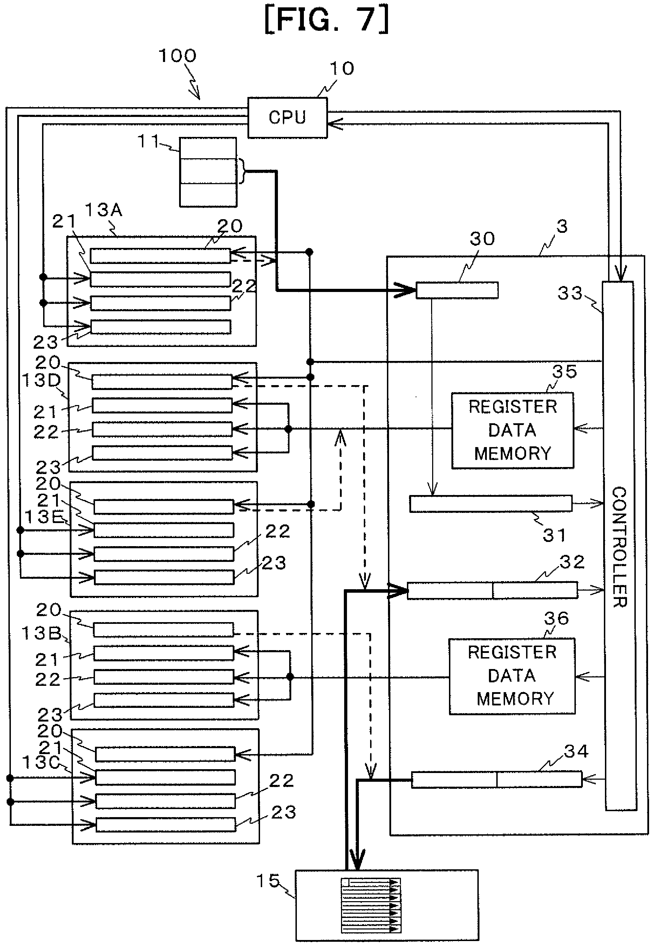

FIG. 7 shows the detailed composition of the companion chip 3. As shown in FIG. 7, the companion chip 3 comprises a buffer 30, a shift operator 31, a buffer 32, a controller 33, a buffer 34 and register data memories (RDM) 35 and 36.

The buffer 30 is a memory capable of holding a 1-byte data sequence (first data sequence), for example. The shift operator 31 shifts the data sequence (first data sequence) stored in the buffer 30 by a number of bits designated by the CPU 10 and stores the result as 2-bytes data (second data sequence).

On the other hand, the buffer 32 stores a 2-bytes data sequence (third data sequence) already stored at the writing start position of the VRAM 15.

The controller 33 controls DMA transfer in accordance with instructions from the CPU 10. Furthermore, the controller 33 uses the 2-bytes data sequence (second data sequence) shifted by the shift operator 31 and the 2-bytes data sequence (third data sequence) read from the buffer 32 to perform a prescribed operation and generate a data sequence (fourth data sequence) integrating these.

The data sequence (fourth data sequence) generated by the controller 33 is stored in the buffer 34. The controller 33 writes the data sequence stored in the buffer 34 in the VRAM 15.

The register data memory 35 is a memory for storing data set in the reading start address register 21, the writing start address register 22 and the transfer count register 23 of the DMA controller 13D. The register data memory 36 is a memory for storing data set in the reading start address register 21, the writing start address register 22 and the transfer count register 23 of the DMA controller 13B.

The composition of the companion chip 3 will be described in further detail.

1 byte of image data from the ROM 11 is DMA transferred to the buffer 30. This DMA transfer is executed by the DMA controller 13A.

Preceding this DMA transfer, the CPU 10 accomplishes setting of the register group of the DMA controller 13A. Through this setting, the leading address of the image data of the ROM 11 is set in the reading start address register 21 of the DMA controller 13A. In addition, the address of the buffer 30 of the companion chip 3 is set in the writing start address register 22. In addition, the number of bytes of the image information as a whole (that is to say, the transfer count necessary for transferring the image data in entirety) is set in the transfer count register 23.

The controller 33 of the companion chip 3 outputs a control signal to the controller 20 of the DMA controller 13A. When the controller 33 outputs the control signal for DMA transfer start, the controller 20 of the DMA controller 13A starts DMA transfer to the buffer 30 from the ROM 11.

On the other hand, 2 bytes of image data are DMA transferred to the buffer 32 starting at the writing start address of the VRAM 15. This DMA transfer is executed by the DMA controller 13D.

Preceding this DMA transfer, settings are made in the register group of the DMA controller 13D. Through these settings, the writing start address of the VRAM 15 is set in the reading start address register 21 of the DMA controller 13D. In addition, the address of the buffer 32 is set in the writing start address register 22. In addition, a byte count with 1 byte added to the byte count of one row of data sequence (here, 2 bytes) is set in the transfer count register 23. These register settings are accomplished as described below.

In the rendering device 100, the DMA controller 13E is provided for settings in the register group of the DMA controller 13D. With the DMA controller 13E, data set in the register group of the DMA controller 13D is DMA transferred to the register group of the DMA controller 13D from the register data memory 35 of the companion chip 3.

First, the CPU 10 accomplishes register settings for the DMA controller 13E. The address of the register memory 35 of the companion chip 3 is set in the reading start address register 21 of the DMA controller 13E. In addition, the address of the register group of the DMA controller 13D is set in the writing start address register 22. In addition, the byte count of the register group is set in the transfer count register 23.

The CPU 10 outputs to the controller 33 of the companion chip 3 the vertical and horizontal byte count in the image information read from the ROM 11, and the position of rendering that image on the VRAM 15 (the writing start address on the VRAM 15). The controller 33 sets in the register data memory 35 the writing start address on the VRAM 15, the address of the buffer 32 and 2 bytes.

The controller 33 outputs the control signal for starting DMA transfer to the controller 20 of the DMA controller 13E. Whereupon, the data contained in the register data memory 35 of the companion chip 3 is DMA transferred to the register group of the DMA controller 13D under control of the DMA controller 13E. As a result, the writing start address of the VRAM 15 is set in the reading start address register 21 of the DMA controller 13D. In addition, the address of the buffer 32 of the companion chip 3 is set in the writing start address register 22. In addition, the byte count (2) of the buffer 32 is set in the transfer count register 23.

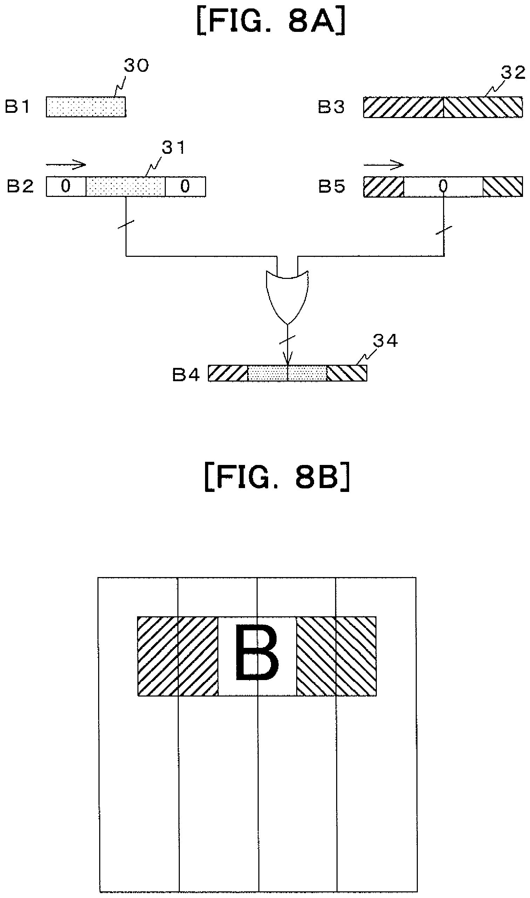

As shown in FIG. 8A, the data sequence read into the buffer 30 is a data sequence B1. Suppose the data sequence that is a 2-bytes data sequence including the data sequence B1 shifted by the shift operator 31 is a data sequence B2. In addition, suppose the 2-bytes data sequence read into the buffer 32 is a data sequence B3. The data sequences B2 and B3 are input into the controller 33. The controller 33 first generates a data sequence B5 by clearing to zero the value of the part of the data sequence B3 corresponding to the data sequence B1. Furthermore, the controller 33 generates as a data sequence B4 the logical sum of the data sequence B2 and the data sequence B5. This data sequence B4 is output to the buffer 34.

1 byte or image data DMA transferred to the buffer 34 is DMA transferred to the VRAM 15. This DMA transfer is executed by the DMA controller 13B.

Preceding the DMA transfer, setting of the register group in the DMA controller 13B is done. Through this setting, the address of the buffer 34 of the companion chip 3 is set in the reading start address register 21 of the DMA controller 13B. In addition, the writing start address of the VRAM 15 is set in the writing start address register 22. In addition, the byte count (for example, 2) found by adding one more byte to the byte count corresponding to the length of the data sequence of each row of the image information is set in the transfer count register 23. These register settings are accomplished as described below.

In the rendering device 100, the DMA controller 13C is provided for settings in the register group of the DMA controller 13B. With the DMA controller 13C, data set in the register group of the DMA controller 13B is DMA transferred to the register group of the DMA controller 13B from the register data memory 36 of the companion chip 3.

First, the CPU 10 accomplishes register settings for the DMA controller 13C. The address of the register memory 36 of the companion chip 3 is set in the reading start address register 21 of the DMA controller 13C, the address of the register group of the DMA controller 13B is set in the writing start address register 22 and the byte count of the register group is set in the transfer count register 23.

Next, the CPU 10 outputs to the controller 33 of the companion chip 3 the vertical and horizontal byte count in the image information read from the ROM 11, and the position of rendering that image on the VRAM 15 (the writing start address on the VRAM 15). The controller 33 sets in the register data memory 36 the writing start address on the VRAM 15, the address of the buffer 30 and a byte count found by adding 1 byte to the byte count of the data sequence of one row (the transfer count).

The controller 33 outputs the control signal for starting DMA transfer to the controller 20 of the DMA controller 13C. Whereupon, the data contained in the register data memory 36 of the companion chip 3 is DMA transferred to the register group of the DMA controller 13B under control of the DMA controller 13C. As a result, the address of the buffer 34 of the companion chip 3 is set in the reading start address register 21 of the DMA controller 13B, the writing start address of the VRAM 15 is set in the writing start address register 22 and the byte count (transfer count) found by adding 1 byte to the byte count of the data sequence of each row of the image information is set in the transfer count register 23.

The controller 33 of the companion chip 3 determines whether or not writing of the data sequence of each row of image data to the VRAM 15 by the DMA controller 13B is concluded, based on the byte count found by adding 1 byte to the byte count of the data sequence of one row of image data read from the ROM 11. When it is determined that writing is concluded, the controller 33 sets the writing start address of the next row and the address of the same column in the region corresponding to the writing start address of the register data memory 36.

Next, the controller 33 outputs the control signal for DMA transfer start to the DMA controller 13C. Upon receiving this, the DMA controller 13C DMA transfers the data in the register data memory 36 to the DMA controller 13B. As a result, the address set in the writing start address register 22 of the DMA controller 13B is updated to the address of the same column as the writing start address in the next row. In data transfer starting with the next, data transfer to the VRAM 15 from the buffer 34 is started from the updated writing start address.

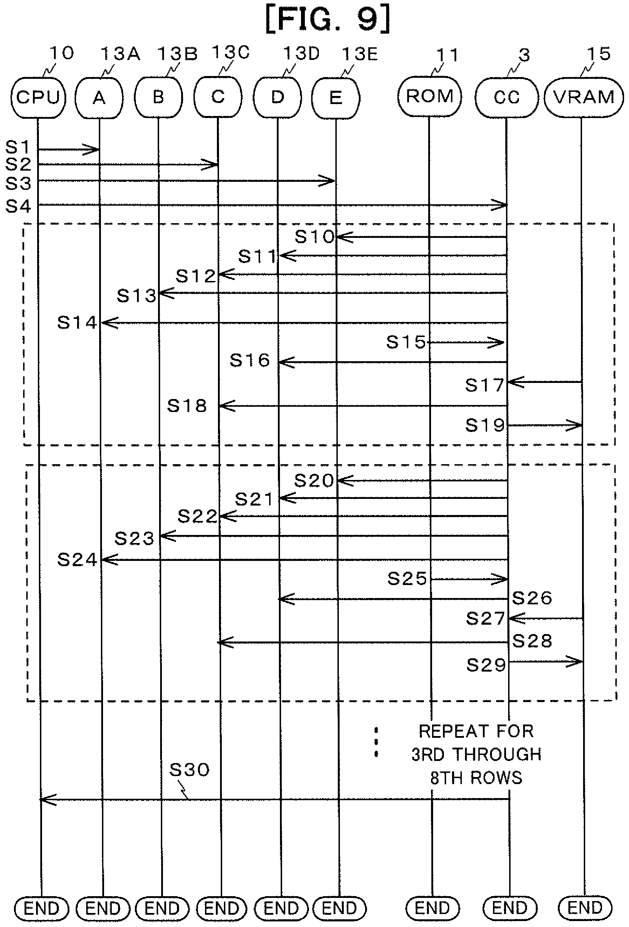

Next, the actions of the writing device 100 according to this preferred embodiment will be explained with reference to the sequence chart in FIG. 9.

FIG. 9 shows a process sequence when the image of a given character is displayed at a prescribed position on the display screen of the display device 2 by CPU 10. Here, the explanation will be for the case when image data of a character with a horizontal width of 8 bits is displayed on the display screen of the display device 2. In FIG. 9, A, B, C, D, and E respectively indicate the DMA controllers 13A, 13B, 13C, 13D and 13E. In addition, CC indicates the companion chip 3.

First, the CPU 10 accomplishes register setting of the DMA controller 13A (step S1). Through this, a condition in which DMA transfer from the ROM 11 to the buffer 30 of the companion chip 3 is possible is achieved.

Next, the CPU 10 accomplishes register setting of the DMA controller 13C (step S2). Through this, a condition in which DMA transfer to the register group of the DMA controller 13B from the register data memory 36 of the companion chip 3 is possible is achieved.

Next, the CPU 10 accomplishes register setting of the DMA controller 13E (step S3). Through this, a condition in which DMA transfer to the register group of the DMA controller 13D from the register data memory 35 of the companion chip 3 is possible is achieved.

Next, the CPU 10 sends to the controller 33 of the companion chip 3 a rendering command including the horizontal and vertical byte counts of the image data displayed, the writing start address of the VRAM 15 (the upper left address) and the shift number for shifting the image data (step S4).

Upon receiving this rendering command, the controller 33 of the companion chip 3 sets in the register data memory 36 the address of the buffer 34, the writing start address of the VRAM 15 and the transfer count (2 bytes).

Next, the companion chip 3 outputs a control signal to start DMA transfer to the DMA controller 13E (step S10). Through this, DMA transfer from the register data memory 35 of the companion chip 3 to the register group of the DMA controller 13D is accomplished (step S 11). Through this, a DMA transfer from the VRAM 15 to the buffer 32 is possible.

Next, the companion chip 3 outputs a control signal to start DMA transfer to the DMA controller 13C (step S12). Through this, DMA transfer from the register data memory 36 of the companion chip 3 to the register group of the DMA controller 13B is accomplished (step S13). Through this, a DMA transfer from the VRAM 15 to the buffer 34 is possible.

Next, the companion chip 3 outputs a control signal to start DMA transfer to the DMA controller 13A (step S14). Through this, 1 byte of data at the start address of the image data in the ROM 11 is transferred to the buffer 30 of the companion chip 3 (step S 15). Following this, in the companion chip 3 the data sequence read into the buffer 30 is stored in the shift operator 31, as shown in FIG. 8A, and is shifted by a shift number specified by the CPU 10.

Next, the companion chip 3 outputs a control signal to start DMA transfer to the DMA controller 13D (step S16). Through this, 2 bytes of data from the writing start address of the VRAM 15 are transferred to the buffer 32 of the companion chip 3 (step S17).

The data sequence shifted by the shift operator 31 and the data sequence read into the buffer 32 are input into the controller 33 and a logical operation is made, as shown in FIG. 8A. Through this logical operation, an integrated data sequence of the two data sequences is generated. This integrated data sequence is written to the buffer 34.

Next, the controller 33 of the companion chip 3 outputs a control signal to start DMA transfer to the DMA controller 13C (step S18). Whereupon, the 2-bytes data sequence written to the buffer 34 is transferred to the writing start address of the VRAM 15 (step S 19)

The processes of these steps S10 through S 19 are the writing process of the first row.

Upon detecting at this point in time that writing of the first row has concluded, the controller 33 accomplishes a writing process for the second row the same as the above-described writing process of the first row (steps S20 through S29). Furthermore, writing processes for the 3 through 8 rows are accomplished the same as the writing process for the second row.

When the writing process of the eighth row concludes, the controller 33 outputs a conclusion notification signal to the CPU 10 (step S30). Through this, image data of the character at an arbitrary position without 8-bit spacing is written to the VRAM 15 as shown in FIG. 8B, and the image (character B) based on that image data is displayed on the display screen of the display device 2. In addition, the images around the VRAM 15 are read and integrated with the character B and are then rewritten to the VRAM, so even when the character B is displayed, the images d already displayed on the two ends thereof are not erased.

As described in detailed above, with this preferred embodiment, it is possible to display image data of each row read from the ROM 11 shifted by an arbitrary bit number. Consequently, it is possible to cause images to be displayed based on image data at an arbitrary position. In addition, final image data is generated through a logical operation with image data read from the VRAM 15, so it is possible to prevent erasure of surrounding images already displayed. As a result, it is possible to improve freedom in displays on a full-dot liquid crystal display screen.

In this preferred embodiment, a rendering device 100 that accomplishes a process such that images already retained in the VRAM 15 are not erased by newly displayed images was explained. However, the operation process executed by the controller 33 is intended to be illustrative and not limiting, for applying various display effects to the displayed image is also possible.

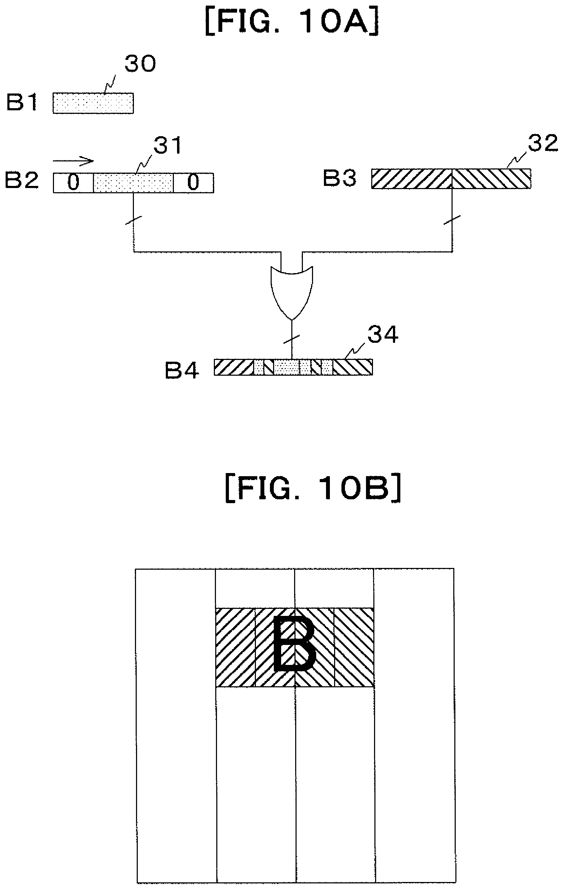

For example, as shown in FIG. 10A, it is possible to output to the buffer 34 a data sequence B4 obtained by finding the logical sum of the data sequence B2 whose displayed image data is shifted and the data sequence B3 read from the VRAM 15. The image displayed by the data sequence B4 obtained in this manner becomes an image through which images already retained in the VRAM 15 pass with respect to images read from the ROM 11, as shown in FIG. 10B.

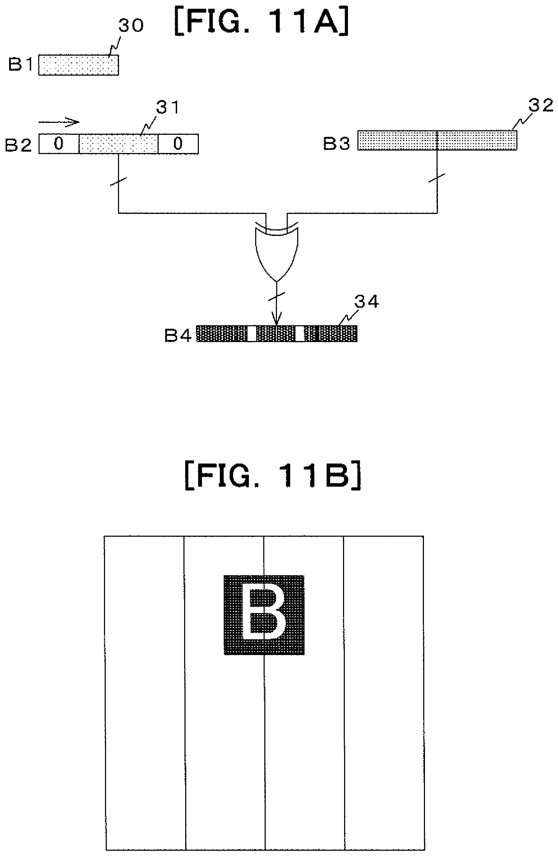

In addition, as shown in FIG. 11A, it is possible to output to the buffer 34 a data sequence B4 obtained by performing an exclusive OR operation on the data sequence B2 whose displayed image data is shifted and the data sequence B3 read from the VRAM 15. The image displayed by the data sequence B4 obtained in this manner becomes a reverse image of the image generated by the image already retained in the VRAM 15 and the image read from the ROM 11, as shown in FIG. 11B.

In the controller 33, it is preferable to be able to select one of the above-described three display effects based on settings.

In this preferred embodiment, the horizontal size of the image data was taken to be 1 byte, but it is possible for the present invention to be applied to image data having a size of 2 or more bytes as well.

The transfer source to the buffer 30 need not be the ROM 11 but may be the RAM 12.

The rendering device 100 according to the above-described preferred embodiments was a remote controller for an air conditioning device, but it is possible for this to be a remote controller for a lighting device or some other electrical equipment.

Having described and illustrated the principles of this application by reference to one preferred embodiment, it should be apparent that the preferred embodiment may be modified in arrangement and detail without departing from the principles disclosed herein and that it is intended that the application be construed as including all such modifications and variations insofar as they come within the scope of the subject matter disclosed herein.

### [Industrial Applicability]

The present invention is applicable to a remote controller for electrical equipment such as an air conditioning device or a lighting device.

### [Reference Signs List]

- 1: Microcomputer
- 2: Display device
- 3: Companion chip (CC)
- 4: Image data
- 10: CPU
- 11: ROM
- 12: RAM
- 13A, 13B, 13C, 13D, 13E: DMA controller
- 14: External interface (I/F)
- 15: VRAM
- 16: Operation input interface (I/F)
- 17: Bus
- 20: Controller
- 21: Reading start address register
- 22: Writing start address register
- 23: Transfer count register
- 30: Buffer
- 31: Shift operator
- 32: Buffer
- 33: Controller
- 34: Buffer
- 35, 36: Register data memory (RDM)
- 100: Rendering device
- P: Position

## Claims

1. A rendering device (100), comprising a microcomputer (1) and a companion device (3), arranged to read in address units image information stored in a memory medium (11), wherein data sequences of each row of the image are linked in a sequential order in the memory medium (11) implemented on the microcomputer (1), and to write image data for display in a prescribed region of a two-dimensional image display memory (15) implemented on the microcomputer (1) based on the image information read from the memory medium (11), the rendering device (100) being **characterized by** comprising:
a first reader (13A) arranged to read in address units a first data sequence in one row of the image information stored in the memory medium (11) from a reading start address that is a lead thereof, the first reader (13A) being implemented on the microcomputer(1);
a shift operator (31) arranged to generate a second data sequence comprising the same number of bits as one row of the image information, by shifting the first data sequence of the image information read by the first reader (13A) by a specified number of bits, and clearing to zero a part of the second data sequence other than the first data sequence, the shift operator (31) being implemented on the companion device (3);
a second reader (13D) arranged to read a third data sequence, of a same number of bits as one row of the image information, already stored at a writing start position of the image display memory (15), the second reader (13D) being implemented on the microcomputer (1);
an operator (33) arranged to generate a fourth data sequence by performing a prescribed operation on the second data sequence shifted by the shift operator (31) and the third data sequence read by the second reader (13D), the operator (33) being implemented on the companion device (3);
a writer (13B) arranged to successively write in said address units the fourth data sequence generated by the operator (33) in a horizontal direction beginning from the writing start position of the image display memory (15), the writer (13B) being implemented on the microcomputer (1); and
a writing position updater (33) arranged to update the writing start position in the image display memory (15) to a position in the same column of a next row after each writing of a fourth data sequence by the writer (13B), the writing position updater (33) being implemented on the companion device (3), wherein
the first reader (13A) is a first Direct memory access DMA controller (13 A) that is arranged to execute a DMA transfer from the memory medium (11) to a first buffer (30) of the companion device (3),
the second reader (13D) is a second DMA controller (13D) that is arranged to execute a DMA transfer from the image display memory (15) to a second buffer (32) of the companion device (3), and
the writer (13B) is a third DMA controller (13B) that is arranged to execute a DMA transfer from the companion (3) device to the image display memory (15); wherein
the microcomputer (1) further comprises:
a fourth DMA controller (13E) that is arranged to execute a DMA transfer from a first register data memory (35) of the companion device (3) to a register of the second DMA controller (13B), and
a fifth DMA controller (13C) that is arranged to execute a DMA transfer from a second register data memory (36) of the companion device (3) to a register of the third DMA controller (13B), and
the writing position updater (33) is arranged to update the writing start position in the image display memory (15) to a position in the same column of the next row, through updating the registers of the second and third DMA controllers (13D, 13B) by the fourth and fifth DMA controllers (13E, 13C).

2. The rendering device (100) according to Claim 1, **characterized in that** the operator (33):
is arranged to generate a fifth data sequence by clearing to zero a part in the third data sequence, the part corresponding to the first data sequence shifted by the shift operator (31); and to generate the fourth data sequence by taking a logical sum of the second data sequence and the fifth data sequence.

3. The rendering device (100) according to Claim 1, **characterized in that**
the operator (33) is arranged to generate the fourth data sequence by taking a logical sum of the second data sequence and the third data sequence.

4. The rendering device (100) according to Claim 1, **characterized in that**
the operator (33) is arranged to generate the fourth data sequence by performing an exclusive OR operation on the second data sequence and the third data sequence.

5. A rendering method for reading in address units image information stored in a memory medium (11), wherein data sequences of each row of the image are linked in a sequential order, the memory medium (11) being implemented on a microcomputer (1), and for writing image data for display in a prescribed region of a two-dimensional image display memory (15) implemented on the microcomputer (1), the method being **characterized by** comprising:
a first reading step by a first Direct memory access DMA controller (13A) to read in address units a first data sequence in one row of data in the image information stored in the memory medium (11) from a reading start address that is a lead thereof, the first DMA controller (13 A) being implemented on the microcomputer (1)
a shift operation step by an external device (3) to generate a second data sequence, of a same number of bits as the one row of the image information, by shifting the first data sequence by a specified number of bits, and clearing to zero a part of the second data sequence other than the first data sequence;
a second reading step by a second DMA controller (13D) to read a third data sequence, of a same number of bits as one row of the image information, already stored at a writing start position of the image display memory (15), the second DMA controller (13D) being implemented on the microcomputer (1)
an operation step by the external device (3) to generate a fourth data sequence by performing a prescribed operation on the second data sequence shifted in the shift operation step and the third data sequence read in the second reading step;
a writing step by a third DMA controller (13B) to successively write in said address units the fourth data sequence generated in the operation step at the writing start position of the image display memory (15), the third DMA controller (13B) being implemented on the microcomputer (1); and
a writing position update step by the external device (3) to successively update the writing start position in the image display memory (15) to a position in the same column of a next row after each writing of a fourth data sequence; wherein the method further comprising:
a DMA transfer step to transfer a first register data memory (35) of the external device (3) to a register of the second DMA controller (13B) by a fourth DMA controller (13E), and
a DMA transfer step to transfer a second register data memory (36) of the external device (3) to a register of the third DMA controller (13B) by a fifth DMA controller (13C), and wherein in the writing position update step, the writing start position in the image display memory (15) is updated to a position in the same column of the next row, through updating the registers of the second and third DMA controllers (13D, 13B) by the fourth and fifth DMA controllers (13E, 13C).

6. A program for executing the method steps of claim 5 on a microcomputer (1) in communication with an external device (3).

## Patentansprüche

1. Rendereinrichtung (100), umfassend einen Mikrocomputer (1) und eine Begleiteinrichtung (3), die eingerichtet ist, um in Adresseneinheiten in einem Speichermedium (11) gespeicherte Bildinformationen zu lesen, wobei Datensequenzen von jeder Zeile des Bildes in sequentieller Reihenfolge in dem auf dem Mikrocomputer (1) implementierten Speichermedium (11) verknüpft sind, und um Bilddaten für die Anzeige in einem vorgeschriebenen Bereich eines zweidimensionalen Bildanzeigespeichers (15), der auf dem Mikrocomputer implementiert ist, auf der Grundlage der aus dem Speichermedium (11) gelesenen Bildinformationen zu schreiben, wobei die Rendereinrichtung (100) **dadurch gekennzeichnet ist, dass** sie umfasst:
einen ersten Leser (13A), der eingerichtet ist, um in Adresseneinheiten eine erste Datensequenz in einer Zeile der im Speichermedium (11) gespeicherten Bildinformationen von einer Lesestartadresse, die eine Führung hiervon ist, zu lesen, wobei der erste Leser (13A) auf dem Mikrocomputer (1) implementiert ist;
einen Verschiebungsoperator (31), der eingerichtet ist, um eine zweite Datensequenz, die die gleiche Anzahl von Bits umfasst wie eine Zeile der Bildinformationen, zu erzeugen, durch Verschieben der ersten Datensequenz der durch den ersten Leser (13A) gelesenen Bildinformationen um eine bestimmte Anzahl von Bits, und Löschen auf Null eines Teils der zweiten Datensequenz, die nicht die erste Datensequenz ist, wobei der Verschiebungsoperator (31) auf der Begleiteinrichtung (3) implementiert ist;
einen zweiten Leser (13D), der eingerichtet ist, um eine dritte Datensequenz, mit einer gleichen Anzahl von Bits wie eine Zeile der Bildenformationen, die an einer Schreibstartposition des Bildanzeigespeichers (15) bereits gespeichert wurde, zu lesen, wobei der zweite Leser (13D) auf dem Mikrocomputer (1) implementiert ist;
einen Operator (33), der eingerichtet ist, um eine vierte Datensequenz zu erzeugen durch Durchrühren einer vorgeschriebenen Operation auf der zweiten Datensequenz, die durch den Verschiebungsoperator (31) verschoben wurde, und auf der dritten Datensequenz, die durch den zweiten Leser (13D) gelesen wurde, wobei der Operator (33) auf der Bagleiteinrichtung (3) implementiert ist;
einen Schreiber (13B), der eingerichtet ist, um in die Adresseneinheiten die durch den Operator (33) erzeugte vierte Datensequenz in einer horizontalen Richtung beginnend von der Schreibstartposition des Bildanzeigespeichers (15) sukzessiv zu schreiben, wobei der Schreiber (13B) auf dem Mikrocomputer (1) implementiert ist; und
einen Schreibpositionsaktualisierer (33), der eingerichtet ist, um die Schreibstartposition im Bildanzeigespeicher (15) auf eine Position in der gleichen Spalte einer nächsten Zeile nach jedem Schreiben einer vierten Datensequenz durch den Schreiber (13B) zu aktualisierten, wobei der Schreibpositionsaktuatisierer (33) auf der Begleiteinrichtung (3) implementiert ist, wobei der erste Leser (13A) eine erste Direktspeicherzugriffs-(DMA)-Steuerung (13A) ist, die eingerichtet ist, um eine DMA-Übertragung vom Speichermedium (11) an einen ersten Puffer (30) der Begleiteinrichtung (3) auszuführen,
der zweite Leser (13D) eine zweite DMA-Steuerung (13D) ist, die eingerichtet ist, um eine DMA-Übertragung vom Bildanzeigespeicher (15) an einen zweiten Puffer (32) der Begleiteinrichtung (3) auszuführen, und
der Schreiber (13B) eine dritte DMA-Steuerung (13B) ist, die eingerichtet ist, um eine DMA-Übertragung von der Begleiteinrichtung (3) an den Bildanzeigespeicher (15) auszuführen; wobei der Mikrocomputer (1) weiter umfasst:
eine vierte DMA-Steuerung (13E), die eingerichtet ist, um eine DMA-Übertragung von einem ersten Registerdatenspeicher (35) der Begleiteinrichtung (3) an ein Register der zweiten DMA-Steuerung (13B) auszuführen, und
eine fünfte DMA-Steuerung (13C), die eingerichtet ist, um eine DMA-Übertragung von einem zweiten Registerdatenspeicher (36) der Begleiteinrichtung (3) an ein Register der dritten DMA-Steuerung (13B) auszuführen, und
der Schreibpositionsaktualisierer (33) eingerichtet ist, um die Schreibstartposition im Bildanzeigespeicher (15) auf eine Position in der gleichen Spalte der nächsten Zeile zu aktualisieren, durch Aktualisieren der Register der zweiten und dritten DMA-Steuerung (13D, 13B) durch die vierte und fünfte DMA-Steuerungen (13E, 13C).

2. Rendereinrichtung (100) nach Anspruch 1, **dadurch gekennzeichnet, dass** der Operator (33) eingerichtet ist, um eine fünfte Datensequenz zu erzeugen durch Löschen auf Null eines Teils in der dritten Datensequenz, wobei der Teil der durch den Verschiebungsoperator (31) verschobenen ersten Datensequenz entspricht; und um die vierte Datensequenz zu erzeugen durch Heranziehen einer logischen Summe der zweiten Datensequenz und der fünften Datensequenz.

3. Rendereinrichtung (100) nach Anspruch 1, **dadurch gekennzeichnet, dass** der Operator (33) eingerichtet ist, um die vierte Datensequenz zu erzeugen durch Heranziehen einer logischen Summe der zweiten Datensequenz und der dritten Datensequenz.

4. Rendereinrichtung (100) nach Anspruch 1, **dadurch gekennzeichnet, dass** der Operator (33) eingerichtet ist, um die vierte Datensequenz zu erzeugen durch Durchrühren einer Exklusiv-ODER-Operation auf der zweiten Datensequenz und der dritten Datensequenz.

5. Wiedergabeverfahren zum Lesen in Adresseneinheiten von in einem Speichermedium (11) gespeicherten Bildinformationen, wobei Datensequenzen von jeder Zeile des Bildes in einer sequentiellen Reihenfolge verknüpft sind, wobei das Speichermedium (11) auf einem Mikrocomputer (1) implementiert ist, und zum Schreiben von Bilddaten für die Anzeige in einem vorgeschriebenen Bereich eines zweidimensionalen Bildanzeigespeichers (15), der auf dem Mikrocomputer (1) implementiert ist, wobei das Verfahren **dadurch gekennzeichnet ist, dass** es umfasst:
einen ersten Leseschritt durch eine erste Direktspeicherzugriffs-DMA-Steuerung (13A), um in Adresseneinheiten eine erste Datensequenz in einer Zeile von Daten in den im Speichermedium (11) gespeicherten Bildinformationen von einer Lesestartadresse, die eine Führung hiervon ist, zu lesen, wobei die erste DMA-Steuerung (13A) auf dem Mikrocomputer (1) implementiert ist;
einen Verschiebungsoperationsschritt durch eine externe Einrichtung (3), um eine zweite Datensequenz zu erzeugen, mit einer gleichen Anzahl von Bits wie die eine Zeile der Bildinformationen, durch Verschieben der ersten Datensequenz um eine bestimmte Anzahl von Bits, und Löschen auf Null eines Teils der zweiten Datensequenz, die nicht die erste Datensequenz ist;
einen zweiten Leseschritt durch eine zweite DMA-Steuerung (13D), um eine dritte Datensequenz, mit einer gleichen Anzahl von Bits wie eine Zeile der Bildinformationen, die an einer Schreibstartposition des Bildanzeigespeichers (15) bereits gespeichert wurde, zu lesen, wobei die zweite DMA-Steuerung (13D) auf dem Mikrocomputer (1) implementiert ist;
einen Operationsschritt durch die externe Einrichtung (3), um eine vierte Datensequenz zu erzeugen durch Durchführen einer vorgeschriebenen Operation auf der zweiten Datensequenz, die im Verschiebungsoperationsschritt verschoben wurde, und auf der dritten Datensequenz, die im zweiten Leseschritt gelesen wurde;
einen Schreibschritt durch eine dritte DMA-Steuerung (13B), um in die Adresseneinheiten die im Operationsschritt an der Schreibstartposition des Bildanzeigespeichers (15) erzeugte vierte Datensequenz sukzessiv zu schreiben, wobei die dritte DMA-Steuerung (13B) auf dem Mikrocomputer (1) implementiert ist; und
einen Schreibpositionsaktualisierungsschritt durch die externe Einrichtung (3), um die Schreibstartposition im Bildanzeigespeicher (15) auf eine Position in der gleichen Spalte von einer nächsten Zeile nach jedem Schreiben der vierten Datensequenz sukzessive zu aktualisieren; wobei
das Verfahren weiter umfasst:
einen DMA-Übertragungsschritt, um einen ersten Registerdatenspeicher (35) der externen Einrichtung (3) an ein Register der zweiten DMA-Steuerung (13B) durch eine vierte DMA-Steuerung (13E) zu übertragen, und
einen DMA-Übertragungsschritt, um einen zweiten Registerdatenspeicher (36) der externen Einrichtung (3) an ein Register der dritten DMA-Steuerung (13B) durch eine fünfte DMA-Steuerung (13C) zu übertragen, und
wobei im Schreibpositiansaktualisiergsschritt die Schreibstartposition im Bildanzeigespeicher (15) auf eine Position in der gleichen Spalte der nächsten Zeile aktualisiert wird, durch Aktualisieren der Register der zweiten und dritten DMA-Steuerungen (13D, 13B) durch die vierte und fünfte DMA-Steuerungen (13E, 13C),

6. Programm zum Ausführen der Verfahrensschritte nach Anspruch 5 auf einem Mikrocomputer (1) in Kommunikation mit einer externen Einrichtung (3).

## Revendications

1. Dispositif de rendu (100), comprenant un microordinateur (1) et un dispositif compagnon (3), prévu pour lire des informations d'image d'unités d'adresses stockées sur un support de mémoire (11), dans lequel les séquences de données de chaque ligne de l'image sont liées dans un ordre séquentiel dans le support de mémoire (11) mis en oeuvre sur le microordinateur (1), et pour écrire des données d'image destinées à être affichées dans une zone prédéfinie d'une mémoire d'affichage d'images en deux dimensions (15) mise en oeuvre sur le microordinateur (1) sur la base des informations d'image lues depuis le support de mémoire (11), le dispositif de rendu (100) étant **caractérisé en ce qu'**il comprend:
un premier lecteur (13A) prévu pour lire les unités d'adresses d'une première séquence de données d'une ligne des informations d'image stockées sur le support de mémoire (11) depuis une adresse de début de lecture qui est un fil de celles-ci, le premier lecteur (13A) étant mis en oeuvre sur le microordinateur (1) ;
un opérateur de décalage (31) prévu pour générer une seconde séquence de données comprenant le même nombre de bits qu'une ligne des informations d'image, en décalant la première séquence de données des informations d'image lues par le premier lecteur (13A) d'un nombre spécifié de bits, et en mettant à zéro une partie de la seconde séquence de données autre que la première séquence de données, l'opérateur de décalage (31) étant mis en oeuvre sur le dispositif compagnon (3) ;
un second lecteur (13D) prévu pour lire une troisième séquence de données, d'un même nombre de bits qu'une ligne des informations d'image, déjà stockée à un emplacement de début d'écriture de la mémoire d'affichage d'images (15), le second lecteur (13D) étant mis en oeuvre sur le micro-ordinateur (1);
un opérateur (33) prévu pour générer une quatrième séquence de données en effectuant une opération prédéfinie sur la seconde séquence de données décalée par l'opérateur de décalage (31) et la troisième séquence de données lue par le second lecteur (13D), l'opérateur (33) étant mis en oeuvre sur le dispositif compagnon (3) ;
un rédacteur (13B) prévu pour successivement écrire dans lesdites unités d'adresses la quatrième séquence de données générée par l'opérateur (33) dans une direction horizontale en partant de l'emplacement de début d'écriture de la mémoire d'affichage d'images (15), le rédacteur (13B) étant mis en oeuvre sur le microordinateur (1); et
un actualisateur d'emplacement d'écriture (33) prévu pour mettre à jour l'emplacement de début d'écriture dans la mémoire d'affichage d'images (15) pour un emplacement situé dans la même colonne d'une ligne suivante après chaque écriture d'une quatrième séquence de données par le rédacteur (13B), l'actualisateur d'emplacement d'écriture (33) étant mis en oeuvre sur le dispositif compagnon (3), le premier lecteur (13A) étant un premier contrôleur DMA à accès direct à la mémoire (13A) qui est prévu pour exécuter un transfert DMA du support de mémoire (11) vers une première mémoire tampon (30) du dispositif compagnon (3),
le second lecteur (13D) étant un second contrôleur DMA (13D) qui est prévu pour exécuter un transfert DMA entre la mémoire d'affichage d'images (15) et une seconde mémoire tampon (32) du dispositif compagnon (3), et
le rédacteur (13B) étant un troisième contrôleur DMA (13B) qui est prévu pour exécuter un transfert DMA entre le dispositif compagnon (3) et la mémoire d'affichage d'images (15) ; dans lequel
le micro-ordinateur (1) comprend en outre :
un quatrième contrôleur DMA (13E) qui est prévu pour exécuter un transfert DMA entre une première mémoire de données de registre (35) du dispositif compagnon (3) et un registre du second contrôleur DMA (13B), et
un cinquième contrôleur DMA (13C) qui est prévu pour exécuter un transfert DMA entre une seconde mémoire de données de registre (36) du dispositif compagnon (3) et un registre du troisième contrôleur DMA (13B), et
l'actualisateur d'emplacement d'écriture (33) est prévu pour mettre à jour l'emplacement de début d'écriture dans la mémoire d'affichage d'images (15) pour un emplacement situé dans la même colonne de la ligne suivante, en mettant à jour les registres du second et du troisième contrôleurs DMA (13D, 13B) à l'aide du quatrième et du cinquième contrôleurs DMA (13E, 13C).

2. Dispositif de rendu (100) selon la revendication 1, **caractérisé en ce que** l'opérateur (33) :
est prévu pour générer une cinquième séquence de données en mettant à zéro une partie dans la troisième séquence de données, la partie correspondant à la première séquence de données décalée par l'opérateur de décalage (31) ; et
pour générer la quatrième séquence de données en prenant une somme logique de la seconde séquence de données et de la cinquième séquence de données.

3. Dispositif de rendu (100) selon la revendication 1, **caractérisé en ce que** l'opérateur (33) est prévu pour générer la quatrième séquence de données en prenant une somme logique de la seconde séquence de données et de la troisième séquence de données.

4. Dispositif de rendu (100) selon la revendication 1, **caractérisé en ce que** l'opérateur (33) est prévu pour générer la quatrième séquence de données en effectuant une opération de OU exclusif sur la seconde séquence de données et la troisième séquence de données.

5. Procédé de rendu destiné à lire des informations d'image d'unités d'adresses stockées sur un support de mémoire (11), dans lequel les séquences de données de chaque ligne de l'image sont liées dans un ordre séquentiel, le support de mémoire (11) étant mis en oeuvre sur un microordinateur (1), et à écrire des données d'image destinées à être affichées dans une zone prédéfinie d'une mémoire d'affichage d'images en deux dimensions (15) mise en oeuvre sur le microordinateur (1), le procédé étant **caractérisé en ce qu'**il comprend :
une première étape de lecture par un premier contrôleur DMA à accès direct à la mémoire (13A) afin de lire les unités d'adresses d'une première séquence de données d'une ligne de données des informations d'image stockées sur le support de mémoire (11) depuis une adresse de début de lecture qui est un fil de celles-ci, le premier contrôleur DMA (13A) étant mis en oeuvre sur le microordinateur (1) ;
une étape d'opération de décalage par un dispositif externe (3) afin de générer une seconde séquence de données, d'un même nombre de bits qu'une ligne des informations d'image, en décalant la première séquence de données d'un nombre spécifié de bits, et en mettant à zéro une partie de la seconde séquence de données autre que la première séquence de données ;
une seconde étape de lecture par un second contrôleur DMA (13D) afin de lire une troisième séquence de données, d'un même nombre de bits qu'une ligne des informations d'image, déjà stockée à un emplacement de début d'écriture de la mémoire d'affichage d'images (15), le second contrôleur DMA (13D) étant mis en oeuvre sur le micro-ordinateur (1) ;
une étape d'opération par le dispositif externe (3) afin de générer une quatrième séquence de données en effectuant une opération prédéfinie sur la seconde séquence de données décalée à l'étape d'opération et la troisième séquence de données lue à la seconde étape de lecture ;
une étape de rédaction par un troisième contrôleur DMA (13B) afin de successivement écrire dans lesdites unités d'adresses la quatrième séquence de données générée à l'étape d'opération à l'emplacement de début d'écriture de la mémoire d'affichage d'images (15), le troisième contrôleur DMA (13B) étant mis en oeuvre sur le microordinateur (1); et
une étape de mise à jour d'emplacement d'écriture par le dispositif externe (3) afin de mettre à jour successivement l'emplacement de début d'écriture dans la mémoire d'affichage d'images (15) pour un emplacement situé dans la même colonne d'une ligne suivante après chaque écriture d'une quatrième séquence de données ; dans lequel
le procédé comprend en outre :
une étape de transfert DMA destinée à transférer une première mémoire de données de registre (35) du dispositif externe (3) vers un registre du second contrôleur DMA (13B) par un quatrième contrôleur DMA (13E), et
une étape de transfert DMA destinée à transférer une seconde mémoire de données de registre (36) du dispositif externe (3) vers un registre du troisième contrôleur DMA (13B) par un cinquième contrôleur DMA (13C), et
dans lequel, à l'étape de mise à jour d'emplacement d'écriture, l'emplacement de début d'écriture dans la mémoire d'affichage d'images (15) est mis à jour pour un emplacement situé dans la même colonne de la ligne suivante, en mettant à jour les registres du second et du troisième contrôleurs DMA (13D, 13B) par le quatrième et le cinquième contrôleurs DMA (13E, 13C).

6. Programme d'exécution des étapes du procédé selon la revendication 5 sur un microordinateur (1) en communication avec un dispositif externe (3).
